# EUROPÄISCHE PATENTSCHRIFT

(11) **EP 1 897 439 B1**
(45) Veröffentlichungstag und Bekanntmachung des Hinweises auf die Patenterteilung: **22.10.2014**
(21) Anmeldenummer: 07016604.6
(22) Anmeldetag: 24.08.2007
(51) Int. Cl.: A01K 63/04, B05B 17/08, F04D 7/04, F04D 15/00

(54) **Wasserpumpe für Schwebstoffe enthaltende Gewässer**
Water pump for bodies of water containing suspended matter
Pompe à eau pour eaux contenant des matières en suspension

(30) Priorität: 01.09.2006 DE 102006041317
(43) Veröffentlichungstag der Anmeldung: 12.03.2008
(73) Patentinhaber: Oase GmbH, 48477 Hörstel-Riesenbeck (DE)
(72) Erfinder: Hanke, Andreas, 49078 Osnabrück (DE); Lambers, Herbert, 48477 Hörstel (DE); Bülter, Christoph, 48477 Hörstel (DE); Höttecke, Martin, Dr., 48268 Greven (DE)
(74) Vertreter: Busse & Busse

(56) Entgegenhaltungen:
- WO-A-00/61258
- US-A1- 2002 096 219
- US-A1- 2004 018 104
- US-B1- 6 206 298
- US-B1- 6 481 973
- US-B1- 6 717 383

## Beschreibung

Die Erfindung betrifft eine Wasserpumpe für Gewässer, die grundsätzlich nicht nur verschmutzungsfreies Wasser enthalten, sondern mit Schwebstoffen, Schlamm, Blättern und Algenstückchen oder dergleichen durchsetzt sein können. Derartige Gewässer sind beispielsweise Teiche, Aquarien oder Springbrunnen.

In der Praxis bekannte derartige Pumpen nach dem Oberbegriff des Anspruchs 1 haben meist als Sicherung einen Thermoschalter eingebaut. Dieser schaltet die Pumpe aus, wenn sie beispielsweise aufgrund der Verstopfung eines integrierten oder nachgeschalteten Filters durch die Schwebstoffe oder eine Leitungsverstopfung in den Zu- und Ableitungen überhitzen sollte. Auch wenn die Pumpe betrieben wird, ohne daß sie tatsächlich Wasser fördert, läuft diese heiß, so daß nach einer gewissen Zeit der Überhitzungsschutz gereift.

Gemäß US 6,717,383 B1, die als nächstliegender Stand der Technik angesehen wird, ist ein für Springbrunnen in Gebäuden, Wohnungen o. dgl. Innenräumen vorgesehenes System gezeigt, bei dem ein Prozessor zur Erzeugung von dynamisch veränderbaren Wasserstrahl-Mustern genutzt wird. Eine für Schmutzwasser-Pumpen erforderliche Sicherung bei Verstopfungen ist bei diesem System nicht vorgesehen und auch nicht erforderlich.

Es existieren auch Pumpen, die alternativ oder zusätzlich mit einem Abschaltungsmechanismus versehen sind, der sofort dann anspricht, wenn die Pumpe kein Wasser fördert. Dieser Zustand wird bei derartigen Pumpen, die mit lastunabhängiger, konstanter Drehzahl laufen, dadurch festgestellt, daß die Lastaufnahme der Pumpe gemessen wird (US 6,481,973 B1; US 2002/0096219 A1). Ist diese extrem niedrig, heißt das, daß die Pumpe leerläuft. Die Pumpe schaltet dann unmittelbar ab und ist bis dahin oft nur eine viertel Umdrehung gelaufen. Sitzt die Pumpe bei Inbetriebnahme in einem beispielsweise nur wenig gefüllten Pumpensumpf, so gelingt es durch das frühzeitige Abschalten nicht, die Pumpe dauerhaft in Gang zu setzen, da sie nicht lange genug trotz Luftansaugens dreht, um die notwendige Wassermenge in den Pumpensumpf zu saugen, damit die Pumpe bestimmungsgemäß arbeiten kann. Auch ist es nicht möglich, die Funktion der Pumpe wasserlos zu testen, da die Abschaltung so schnell erfolgt, daß nicht erkannt wird, ob der Motor überhaupt dreht.

Der Erfindung liegt daher die Aufgabe zugrunde, eine Pumpe zu schaffen, die die vorgenannten Probleme vermeidet. Diese Aufgabe wird durch eine Wasserpumpe mit den Merkmalen des Anspruchs 1 gelöst.

Durch die kombinierte Verwendung eines elektronisch kommutierten Motors (EC-Motor) sowie das Vorsehen einer Leistungs- und Steuerelektronik mit Betriebszustandserfassungseinrichtung über eine Drehzahlerkennung, einen Prozessor und einen Datenspeicher, kann die Drehzahl der Pumpe erkannt, im Prozessor ausgewertet und mit der Leistungs- und Steuerelektronik für eine Änderung der Pumpenfunktion herangezogen werden. Eine - nur ungenaue - Erfassung der Lastaufnahme in der Pumpe ist nicht mehr erforderlich, und es kann ein EC-Motor mit lastabhängiger und insoweit anpaßbarer Drehzahl verwendet werden.
Die Steuerelektronik kann dann im Bedarfsfall die Drehzahl des Motors soweit herabsenken, daß keine Gefahr besteht, daß dieser Schaden nimmt. Bevorzugt verfügt die Pumpe jedoch auch über eine Unterbrechungsschaltung zwischen dem Leistungseingang und dem Motor, die bei bestimmten, definierten Betriebszuständen die Leistungsaufnahme unterbricht, so daß der Motor vollständig zum Stillstand kommt. Selbstverständlich kann die Pumpe zusätzlich einen herkömmlichen Überhitzungsschutz aufweisen, der beispielsweise über Thermofühler und Unterbrechungskontakt die Pumpe ebenfalls abschaltet, wenn sie aus irgendeinem Grund doch einmal zu heiß geworden sein sollte.

Die für die Betriebszustandserfassung notwendige Drehzahlerkennung kann einen Drehzahlsensor aufweisen, der zur Erkennung der Rotorlage und der Drehfrequenz des Motors ausgelegt ist. Hierbei kann es sich beispielsweise um einen Hall-Sensor handeln. Es ist jedoch auch möglich und durch die der Pumpe innewohnende Intelligenz ohne zusätzlichen Materialaufwand realisierbar, die Drehzahlerkennungseinrichtung sensorlos auszubilden. Dabei wird zu jedem Zeitpunkt an der bzw. den gerade nicht Strom aufnehmenden Spulen, die in dem Moment nicht geschaltet sind, der durch den Magnetrotor rückinduzierte Stromfluß gemessen und aus diesem die Rotorlage ermittelt. Die Geschwindigkeit, mit der sich die einen rückinduzierten Stromfluß abgebenden Spulen ändern, gibt dabei die Drehfrequenz an. Beide Informationen werden über den Prozessor ausgewertet und können zur Steuerung herangezogen werden.

Weitere Vorteile und Einzelheiten ergeben sich aus den Unteransprüchen und in den Zeichnungen dargestellten Ausführungsbeispielen der Erfindung, die im folgenden beschrieben werden; es zeigen:
- Fig. 1: schematisch eine erfindungsgemäße Pumpe,
- Fig. 2: eine Diagramm mit Pumpenkennlinien und Betriebszuständen und
- Fig. 3: ein Diagramm mit Drehzahlkennlinien der Pumpe.

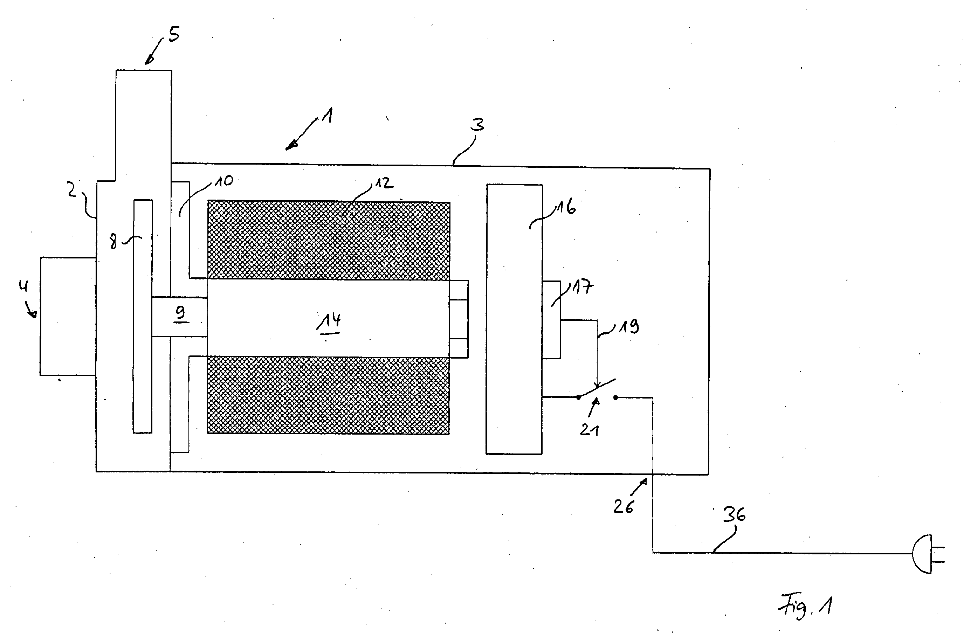

Die in Fig. 1 dargestellte Wasserpumpe besitzt ein Gehäuse 1, das sich in einen Pumpengehäuseteil 2 und einen Motorgehäuseteil 3 untergliedert. Der Pumpengehäuseteil 2 besitzt eine Ansaugöffnung 4, die den Wassereinlaß bildet, und eine Austrittsöffnung 5, die dem Wasserauslaß dient. Im Pumpengehäuseteil 2 ist ein Laufrad 8 auf einer rotierbaren Welle 9 angeordnet. Die Welle 9 erstreckt sich aus dem Pumpengehäuseteil 2 heraus in den Motorgehäuseteil 3 und in diesem in einen EC-Motor. Der EC-Motor besitzt einen mit der Welle 9 drehfest verbundenen Rotor 14 und einen diesen umgebenden Stator 12. Bevorzugt ist der Rotor 14 zweipolig und der Stator 12 sechspolig (oder 2-polig bei Schutzkleinspannung) ausgebildet. Die Welle 9 ist in einem Lagerschild 10 gelagert, das den Motor mechanisch vom Pumpengehäuseteil 2 und dem Laufrad 8 abschirmt.

Im Pumpengehäuse 1 befindet sich weiterhin eine Steuer- und Leistungselektronik 16, die bevorzugt ebenfalls im Motorgehäuse 3 und damit beabstandet von den wasserführenden Teilen angeordnet ist. Dazu gehört auch ein schematisch angedeuteter Mikroprozessor 17, der über eine durch einen Pfeil 19 symbolisierte Steuerleitung eine Unterbrechungsschaltung 21 betätigen kann. Dadurch kann die Stromzufuhr zwischen dem elektrischen Leistungseingang 26 der Pumpe, der mit einem Netzkabel 36 verbunden ist, und der Leistungselektronik 16 und damit dem Motor unterbunden werden. In Fig. 1 ist die Unterbrechungsschaltung 21 aktiviert dargestellt, d.h. der Stromfluß ist unterbrochen und der Motor ausgeschaltet. Die Darstellung der Unterbrechungsschaltung 21 ist nur schematisch. Selbstverständlich kommen nicht nur eine mechanische Schaltung, sondern insbesondere elektronische Schaltungen zum Einsatz.

Die gesamte Elektronik einschließlich Leistungselektronik 16, Mikroprozessor 17 und Unterbrechungsschaltung 21 kann aus Sicherheitsgründen wasserdicht vergossen sein. Dies trifft ebenfalls auf den Stator 12 des Motors zu. Sofern Stator 12 und Rotor 14 insoweit durch ein sogenanntes Spaltrohr voneinander getrennt sind, kann bevorzugt der gesamte freie Motorgehäuseteil wasserdicht vergossen sein.

Die erfindungsgemäße Pumpe ist besonders vielseitig verwendbar, wenn im Datenspeicher Informationen über zumindest einen Normalbetriebszustand der Pumpe hinterlegt sind. Dies können insbesondere die üblichen Pumpenkennlinien und/oder Drehzahlkennlinien sein. Zur optimalen Steuerung ist in der Elektronik eine Software zu hinterlegen, die einen Soll-Ist-Vergleich zwischen den hinterlegten Normalbetriebszustandsdaten und dem von der Betriebszustandserfassungseinrichtung erfaßten aktuellen Betriebszustand der Pumpe durchführt. Bei Überschreiten einer vorgegebenen und ebenfalls im Datenspeicher hinterlegten Differenz zwischen diesen beiden Werten ist dann über die Steuerung eine Veränderung des Betriebszustands der Pumpe einzuleiten. Diese Veränderung kann beispielsweise in der Absenkung der Pumpendrehzahl oder einer Abschaltung der Pumpe durch Aktivierung der Unterbrechungsschaltung 21 bestehen.

Durch die Drehzahlerkennung kann die Pumpe nicht nur eine Steuerelektronik, sondern ohne erheblichen weiteren Materialaufwand auch eine Regelungselektronik umfassen, die in einem geschlossenen Regelkreis dafür sorgt, daß eine gewünschte Drehzahl der Pumpe tatsächlich erreicht und gehalten wird. Dabei wird die Drehzahl kontinuierlich ermittelt, abgeglichen und eventuell angepaßt. Dies geschieht beispielsweise, indem die zulässige und vorgegebene Differenz beim Soll-Ist-Vergleich zwischen Normbetriebszustand und aktuellem Betriebszustand sehr gering angesetzt wird.

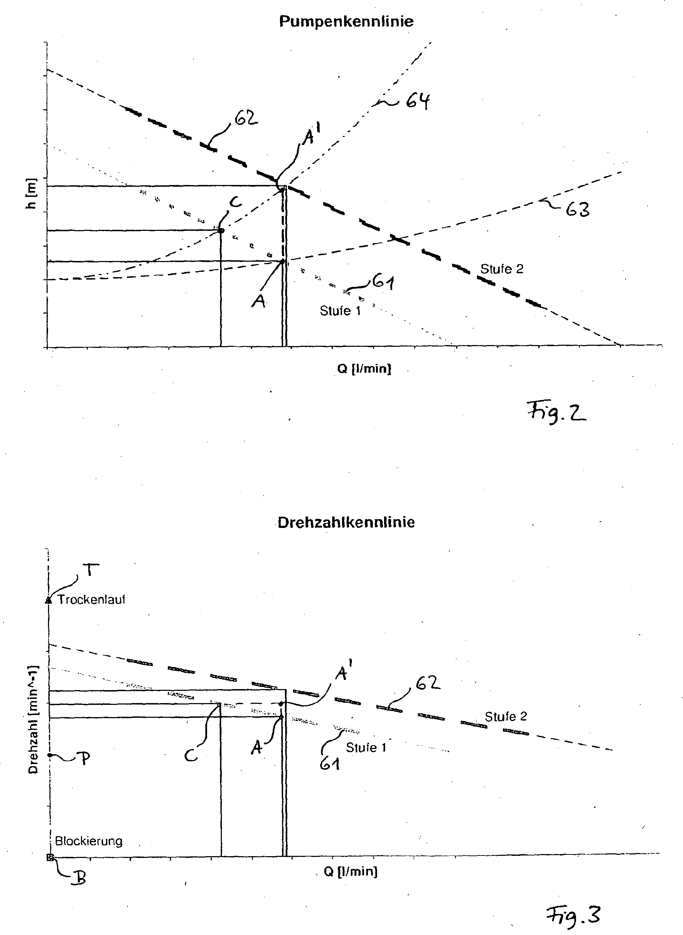

Die Einsatzmöglichkeiten und die Funktion der erfindungsgemäßen Pumpe lassen sich insbesondere anhand der Diagramme der Fig. 2 und 3 erläutern.

In Fig. 2 ist der Wasserdurchfluß in Litern/min aufgetragen im Verhältnis zum Druck bzw. zu der Höhe in Metern, die das Wasser durch die Pumpe überwinden muß. Die helle Linie 61 ist die vom Hersteller angegebene Nennkennlinie 61 für Höhe über Durchfluß, auf der die Pumpe im Normbetriebszustand läuft. Die Pumpe ist jedoch auch in der Lage höhere Leistungen bis zu einer maximalen Kennlinie 62 zu erbringen. Zusätzlich sind in der Fig. 2 zwei Anlagenkennlinien 63, 64 eingezeichnet. Die untere Anlagenkennlinie 63 steht für den bestimmungsgemäßen Einsatz der Pumpe in einer normalen Anlage, bei der die Pumpe üblicherweise eingesetzt wird, und bei optimal freien Leitungen und Filtern, d.h. bei einer insgesamt sauberen Anlage. Die Pumpe läuft dann in der Regel im Betriebszustandspunkt A.

Die obere, steilere Anlagenkennlinie 64 hingegen zeigt mögliche Betriebspunkte der Gesamtanlage wenn Filter verstopft sind, die Anlage insgesamt verschmutzt ist oder aus anderen Gründen höhere Drücke zu überwinden sind. In diesem Fall oder z.B. bei einer Filterverstopfung verschiebt sich der Betriebszustandspunkt der Pumpe von Punkt A entlang der Normkennlinie 61 hin zum Betriebszustandspunkt C. Dabei erreicht die Pumpe nicht mehr den gewünschten Durchfluß Q, sondern dieser sinkt ab. Durch die softwareunterstützte Pumpensteuerung wird in einem solchen Fall der Betriebszustand der Pumpe entlang der Anlagenkennlinie 64 nach oben verschoben, bis wieder der ursprüngliche und gewünschte Durchfluß erreicht ist. Dies ist bei dem eingezeichneten Betriebszustandspunkt A' der Fall. Der Durchfluß der Pumpe kann maximal bis zum Erreichen der maximalen Kennlinie 62 erhöht werden.

Die Pumpe kann somit selbsttätig den gewünschten Betriebszustand einstellen und die Durchflußmenge Q auch bei sich z.B. langsam zusetzendem Filter über lange Zeit hinweg konstant halten, ohne daß der Betreiber der Pumpe ständig selbst nachregeln muß.

Die Steuerung wird dadurch optimiert, indem im Datenspeicher bereits bei Auslieferung der Pumpe verschiedene Pumpen- und Drehzahlkennlinien hinterlegt werden. Die Pumpe kann damit selbständig bei Veränderung der Anlagenkennlinie darauf reagieren und die eingestellte Leistung wieder anfahren.

Im Diagramm der Fig. 3 läßt sich analog zur Ermittlung des Durchflusses aus dem Diagramm aus Fig. 2 die Drehzahl der Pumpe in verschiedenen Betriebszuständen ablesen. Mit 61 ist wiederum die Normkennlinie und mit 62 die maximale Pumpenkennlinie eingezeichnet.

Die beschriebene Betriebszustandserkennungstechnik wird auch für den Trockenlauf- und Blockierschutz benutzt. Bei einem Trockenlauf der Pumpe, d.h. wenn diese kein Wasser saugt, hat die Pumpe keinen Widerstand und dreht daher mit einer sehr hohen Drehzahl ohne Durchfluß, angedeutet durch Betriebszustandspunkt T. Der Punkt T liegt oberhalb der maximalen Kennlinie 62. Dieses wird von der Pumpe durch die Drehzahlerkennung registriert, und die Unterbrechungsschaltung 21 wird aktiviert. Damit jedoch bei nur kurzfristigem Trockenlauf, falls beispielsweise nicht genug Wasser im Pumpensumpf ist, nicht sofort eine Abschaltung der Pumpe erfolgt, ist in der Software vorzugsweise ein vorgegebenes Programm hinterlegt, das zunächst eine oder mehrere Drehzahländerungen der Pumpe herbeiführt, bevor diese abschaltet. Ein derartiges Programm kann die Drehzahl beispielsweise einmal oder mehrfach auf den Betriebspunkt P absenken. Eine Beispiel für einen derartigen Programmverlauf ist:
2 Sekunden Betriebspunkt T, 2 Sekunden Betriebspunkt P,
2 Sekunden Betriebspunkt T, 2 Sekunden Betriebspunkt P,
2 Sekunden Betriebspunkt T, Abschaltung.

Im Verlauf dieses Programmdurchlaufs hat die Pumpe bei beispielsweise nicht ausreichend gefülltem Pumpensumpf die Gelegenheit, sich die für den Betrieb notwendige Wassermenge anzusaugen. Dabei entsteht ein Durchfluß Q, und der Betriebspunkt wandert auf die Normkennlinie 61. Wird das Erreichen dieses Normbetriebszustands während des Programmdurchlaufs erkannt, ist die Software so auszulegen, daß das Programm abgebrochen wird, da dann keine Abschaltung der Pumpe mehr nötig ist.

Ein solches Programm kann auch vorteilhaft als Selbsttest der Pumpe eingesetzt werden. Wird die Pumpe z.B. beim Kauf wasserlos an das Spannungsnetz angeschlossen, durchläuft sie das vorbeschriebene Programm und schaltet an dessen Ende ab. Der Käufer kann daran hörbar erkennen, daß der Motor der Pumpe intakt ist.

Bei einer Blockierung der Pumpe, beispielsweise durch eine Totalverstopfung, tritt der umgekehrte Fall zum Trockenlauf ein. Im Blockierungsfall geht die Drehzahl auf Null an den angegebenen Betriebspunkt B. Dieser Betriebspunkt B liegt deutlich unterhalb der minimalen gewünschten Nennkennlinie 61, so daß dieser Zustand von der Elektronik als Blockierung erkannt und die Pumpe abgeschaltet wird.

Die erfindungsgemäße Pumpe kann somit bei verschiedenen Betriebszuständen eingesetzt werden, ohne daß der Betreiber hier eigene Anpassungen vornehmen muß. Wie beschrieben kann ein automatischer Selbsttest vorgesehen sein, wodurch sich auch beim Verkauf die Funktion der Pumpe plausibel demonstrieren läßt.

## Patentansprüche

1. Wasserpumpe für Schwebstoffe enthaltende Gewässer, wie Teiche, Aquarien oder Springbrunnen, mit einem Gehäuse (1), das einen eine Ansaugöffnung (4) und eine Austrittsöffnung (5) aufweisenden Pumpengehäuseteil (2), in dem ein Laufrad (8) mit einer Welle (9) rotierbar angeordnet ist, und einen Motorgehäuseteil (3) umfaßt, in dem ein Elektromotor aufgenommen ist, wobei der Motor ein elektronisch kommutierter Motor ist und die Pumpe einen Leistungseingang (26) sowie eine Leistungs- und Steuerelektronik (16) für den Motor hat, die einen Prozessor (17) und einen Datenspeicher aufweist, **dadurch gekennzeichnet, daß** die Leistungs- und Steuerelektronik (16) eine Betriebszustandserfassungseinrichtung mit Drehzahlerkennung aufweist und im Datenspeicher Informationen (61, 62) über zumindest einen Normalbetriebszustand der Pumpe hinterlegt sind, derart, daß durch eine Software ein Soll-Ist-Vergleich zwischen den hinterlegten Normbetriebszustandsdaten und dem von der Betriebszustandserfassungseinrichtung erfaßten aktuellen Betriebszustand der Pumpe durchführbar und bei Überschreiten einer vorgegebenen Differenz eine Veränderung des Betriebszustands einleitbar ist, wobei dieser entlang einer Anlagenkennlinie (64) verschiebbar ist.

2. Wasserpumpe nach Anspruch 1, **dadurch gekennzeichnet, daß** die Veränderung des Betriebszustands in einem Duchlaufen eines vorgegebenen Programms mit Drehzahländerung der Pumpe besteht.

3. Wasserpumpe nach Anspruch 1 oder 2, **dadurch gekennzeichnet, daß** bei Wiedererreichen eines Normbetriebszustands während des Programmdurchlaufs das Programm abgebrochen wird.

4. Wasserpumpe nach einem der Ansprüche 1 bis 3, **dadurch gekennzeichnet, daß** die Betriebszustandsänderung in einer Aktivierung der Unterbrechungsschaltung (21) besteht oder endet.

5. Wasserpumpe nach einem der Ansprüche 1 bis 4, **gekennzeichnet durch** eine vom Prozessor (17) gesteuerte Unterbrechungsschaltung (21) zwischen dem Leistungseingang (26) und dem Motor.

6. Wasserpumpe nach einem der vorstehenden Ansprüche, **gekennzeichnet durch** eine Regelungselektronik, die eine vorgegebene Drehzahl einregelt.

7. Wasserpumpe nach einem der vorstehenden Ansprüche, **dadurch gekennzeichnet, daß** die gesamte Elektronik im Motorgehäuseteil (3) angeordnet und wasserdicht vergossen ist.

## Claims

1. Water pump for bodies of water, such as ponds, aquariums or fountains, containing suspended matter, the water pump having a housing (1) comprising a pump housing part (2) which comprises an inlet (4) and an outlet (5) and in which an impeller (8) having a shaft (9) is arranged so as to be rotatable, and comprising a motor housing part (3) in which an electric motor is arranged, the motor being an electronically commutated motor and the pump having a power inlet (26) and a power- and control electronics (16) for the motor, said electronics comprising a processor (17) and a data store, **characterised in that** the power- and control electronics (16) comprises an operating state detection device having speed detection, and pieces of information (61, 62) about at least one normal operating state of the pump are recorded in the data store such that a variance comparison can be carried out, by software, between the recorded normal operating state data and the current operating state of the pump detected by the operating state detection device, and a change in the operating state can be triggered when a predetermined difference is exceeded, it being possible to shift said operating state on a characteristic curve (64) of a system.

2. Water pump according to claim 1, **characterised in that** changing the operating state consists in running through a predetermined program with speed change of the water pump.

3. Water pump according to either claim 1 or claim 2, **characterised in that** the program is stopped when the normal operating state is reached again during the program run.

4. Water pump according to any of claims 1 to 3, **characterised in that** the change of the operating state consists or ends in an activation of the interrupter switch (21).

5. Water pump according to any of claims 1 to 4, **characterised by** an interrupter switch (21), controlled by the processor (17), between the power input (26) and the motor.

6. Water pump according to any of the preceding claims, **characterised by** a regulating electronics which adjusts a predetermined speed.

7. Water pump according to any of the preceding claims, **characterised in that** the entire electronics is arranged in the motor housing (3) and is potted in a watertight manner.

## Revendications

1. Pompe à eau pour eaux contenant des matières en suspension tels que des étangs, des aquariums ou fontaines, avec un carter (1) qui comporte une partie de carter de pompe (2) présentant une ouverture d'aspiration (4) et une ouverture de sortie (5), dans laquelle une roue de roulement (8) est disposée de manière rotative avec un arbre (9), et une partie de boîtier de moteur (3) recevant un moteur électrique, le moteur étant un moteur à commutation électronique et la pompe présentant une entrée de puissance (26) ainsi qu'une électronique de puissance et de commande (16) pour le moteur qui présente un processeur (17) et une mémoire de données, **caractérisée en ce que** l'électronique de puissance et de commande (16) présente un dispositif de détection d'état de fonctionnement avec une détection de vitesse de rotation et des informations (61, 62) sur au moins un état de fonctionnement normal de la pompe sont enregistrées dans la mémoire de données de telle manière qu'une comparaison consigne-réel entre les données d'état de fonctionnement normal enregistrées et l'état de fonctionnement actuel détecté par le dispositif de détection d'état de fonctionnement de la pompe puisse être réalisée et une modification de l'état de fonctionnement puisse être initiée lors du dépassement d'une différence prescrite, celui-ci pouvant être décalé le long d'une ligne caractéristique du système (64).

2. Pompe à eau selon la revendication 1, **caractérisée en ce que** la modification de l'état de fonctionnement consiste en une exécution d'un programme prescrit avec modification de la vitesse de rotation.

3. Pompe à eau selon la revendication 1 ou 2, **caractérisée en ce que** le programme est interrompu en cas de reprise d'un état de fonctionnement normal pendant l'exécution du programme.

4. Pompe à eau selon l'une quelconque des revendications 1 à 3, **caractérisée en ce que** la modification de l'état de fonctionnement consiste ou se termine en une activation du circuit d'interruption (21).

5. Pompe à eau selon l'une quelconque des revendications 1 à 4, **caractérisée par** un circuit d'interruption (21) commandé par le processeur (17) entre l'entrée de puissance (26) et le moteur.

6. Pompe à eau selon l'une quelconque des revendications précédentes, **caractérisée par** une électronique de régulation qui régule une vitesse de rotation prescrite.

7. Pompe à eau selon l'une quelconque des revendications précédentes, **caractérisée en ce que** l'électronique entière est agencée dans la partie de boîtier de moteur (3) et est coulée de manière étanche à eau.
